# EUROPÄISCHE PATENTSCHRIFT

(11) **EP 0 523 340 B1**
(45) Veröffentlichungstag und Bekanntmachung des Hinweises auf die Patenterteilung: **10.08.1994**
(21) Anmeldenummer: 92108196.4
(22) Anmeldetag: 15.05.1992
(51) Int. Cl.: F16L 51/04

(54) **Druckentlasteter Eckrohrbogenkompensator**
Pressure neutralising compensator for a pipe bend
Compensateur à pression neutralisée pour coude de tuyeau

(30) Priorität: 18.07.1991 DE 4123797
(43) Veröffentlichungstag der Anmeldung: 20.01.1993
(73) Patentinhaber: IWK Regler und Kompensatoren GmbH, D-76288 Stutensee-Blankenloch (DE)
(72) Erfinder: Stumm, Hans-Peter, W-7500 Karlsruhe 1 (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- WO-A-79/00656
- GB-A- 1 126 625

## Beschreibung

Die Erfindung betrifft einen druckentlasteten Eckrohrbogenkompensator, bestehend aus einem ersten Anschlußstutzen, einem dazu axial angeordneten Leitungsabschnitt, einem sich anschließenden, einen zweiten Anschlußstutzen bildenden Rohrbogen, einem am Rohrbogen axial zum Leitungsabschnitt angeordneten Sattelabschnitt und einer am ersten Stutzen angeordneten, beide Abschnitte über Bälge druckdicht und axial verschiebbar haltenden Verspannungseinrichtung, wobei zur Druckentlastung am Rohrbogen im Bereich des Sattelabschnitts Durchbrüche und am freien Ende der Verspannungseinrichtung ein druckdichtes Endstück vorgesehen sind.

Ein derartiger Kompensator wird bei einer gewinkelten Leitungsführung eingesetzt, um eine axiale Verschiebung bezüglich einer Leitungsachse zu ermöglichen. Dies ist beispielsweise bei größeren Leitungslängen aufgrund thermischer Längenänderungen notwendig. Gerade bei einem hohen Leitungsdruck und bei einem großen Leitungsdurchmesser ist eine Druckentlastung wichtig, um eine im wesentlichen kräftefreie axiale Verschiebbarkeit zu gestatten.

Ein Innendruck der Leitung führt zu Axialkräften, die eine kräftefreie Verschiebbarkeit verhindern. Das Prinzip der Druckentlastung besteht darin, daß zwischen zwei feststehenden Abschnitten ein verschiebbarer Abschnitt gelagert ist, so daß sich die Axialkräfte aufheben. Zur flexiblen Abdichtung sind zwischen den Abschnitten jeweils Bälge vorgesehen. Um die auftretenden Kräfte, die leicht 100 kN und mehr betragen können, zu übertragen, sind die beiden feststehenden Abschnitte bei bisherigen Lösungen über Stangen miteinander verspannt. Nachteilig ist hierbei, daß aufgrund der erforderlichen starken Auslegung eine erhebliche Baugröße erreicht wird.

Bei bekannten Lösungen sind meistens von innen druckbelastete Bälge vorgesehen. Diese sind im Gegensatz zu von außen druckbelasteten Bälgen knickgefährdet durch Instabilität und daher wesentlich geringer belastbar.

Der Erfindung liegt die Aufgabe zugrunde, einen besonders kompakten Eckrohrbogenkompensator der oben genannten Art zu schaffen, der insbesondere die Verwendung außendruckbelasteter Bälge gestattet.

Die Aufgabe wird dadurch gelöst, daß die Verspannungseinrichtung als ein die Abschnitte umfassendes Rohr mit einer Ausnehmung zur Durchführung des Rohrbogens ausgebildet ist. Das vorgesehene Rohr gestattet eine sehr kompakte Bauweise mit minimalem Außendurchmesser, da Kräfte gleichmäßig über den gesamten Umfang verteilt übertragen werden. Dies hat zur Folge, daß dementsprechend eine gegenüber den sonstigen Verspannungseinrichtungen sehr geringe radiale Ausdehnung notwendig ist.

Das Rohr selbst kann auch von innen, zumindest abschnittsweise, druckbelastet sein, so daß innerhalb angeordnete Bälge in einfacher Weise von außen druckbelastbar sind.

In bevorzugter Ausführung ist vorgesehen, daß die Bälge in einem Ringraum zwischen den Abschnitten und dem Rohr angeordnet sind, und daß die Bälge von außen druckbelastet sind. Dies ermöglicht eine Auslegung für sehr hohe Drücke, ohne daß Instabilität auftritt, und trotzdem eine kompakte Bauweise.

Weiter ist vorgesehen, daß bei jedem Abschnitt ein Balg druckdicht mit dem Rohr verbunden ist. Hierdurch wird eine Abdichtung des Rohrbereichs, in dem sich die Ausnehmung befindet, sichergestellt. Eine einfache und kostengünstige Realisierung ergibt sich beispielsweise dadurch, daß beidseitig der Ausnehmung jeweils ein Ring in das Rohr eingesetzt ist und dieser jeweils mit einem Balg und dem Rohr druckdicht verbunden ist.

Um besonders große Verschiebewege realisieren zu können, sind jedem Abschnitt zwei und mehr Bälge zugeordnet. In bevorzugter Ausführung ist dabei vorgesehen, daß jeweils zwischen den Bälgen eines Abschnitts ein Zwischenring vorgesehen ist, wodurch sich eine besonders einfache Montage ergibt und ein Anliegen von Wellenbergen am Rohr oder an einem Abschnitt verhindert wird.

Um die Bälge lediglich in axialer Richtung zu beanspruchen, ist vorgesehen, daß die Abschnitte im Rohr axial geführt sind.

Dies wird in einer Ausführungsform dadurch realisiert, daß wenigstens an einem Abschnitt außen ein Führungsring angeordnet ist. Diese Ausgestaltung hat den Vorteil, daß nur kleine Reibflächen vorhanden sind.

In einer zweiten Ausführung ist vorgesehen, daß im Rohr wenigstens ein in einen Abschnitt innen eingreifendes Führungsrohr angeordnet ist. Diese Ausführung ist insbesondere in strömungstechnischer Hinsicht gerade am ersten Anschlußstutzen günstig, da weitgehend eine Wirbelbildung vermieden wird. Hier ergibt sich eine besonders einfache Realisierung dadurch, daß der Anschlußstutzen auch das Führungsrohr des Leitungsabschnitts bildet.

In einer weiteren Ausführungsform ist vorgesehen, daß die Bälge in axialer Verlängerung zu den Abschnitten angeordnet sind. Diese Ausgestaltung gestattet die kompakteste Bauweise bei gleichem Nenndurchmesser, da hier die Bälge keinen inneren Rohrabschnitt umfassen.

Dabei ist auch vorgesehen, daß die Bälge die Führungsrohre umfassen, wodurch eine thermische Belastung der Bälge durch ein Medium verringert wird.

In einer einfachen Ausführung, die aus wenigen Teilen hergestellt werden kann, bildet das Rohr den Anschlußstutzen. So kann das Rohr beispielsweise im Bereich des Anschlußstutzens konisch verjüngt sein.

Eine Ausführung zeichnet sich dadurch aus, daß die Ausnehmung so ausgebildet ist, daß ihre Kante ein angulares Verdrehen des Rohrbogens um die Achse der Abschnitte begrenzt oder verhindert. Dabei wird die Konstruktion je nach Einsatzzweck ausgelegt.

Die Ausnehmung schwächt das Rohr, so daß zur Kompensation der axialen Belastbarkeit das Rohr im Bereich der Kante der Ausnehmung verstärkt ist. Hierzu ist in einer einfachen Ausbildung vorgesehen, daß die Kante der Ausnehmung einen Kragen aufweist.

Bevorzugt ist das Rohr aus wenigstens zwei Teilen hergestellt. So ergibt sich eine einfache Montage, insbesondere wenn das Rohr aus Halbschalen hergestellt ist.

Um die Schwächung des Rohres durch die Ausnehmung auszugleichen, wird die Ausnehmung bei einer bevorzugten Ausgestaltung in einer höher belastbaren Halbschale ausgebildet. Hierzu kann die Halbschale beispielsweise aus einem hochwertigeren Material bestehen oder eine größere Wanddicke als die sonstigen Rohrbereiche aufweisen.

Da eine Verstärkung des Rohres lediglich im Bereich der Ausnehmung notwendig ist, zeichnet sich eine besonders gewichtsparende, kostengünstige Ausführung dadurch aus, daß das Rohr aus wenigstens zwei Teilen im Bereich der Ausnehmung und sich daran anschließenden, einstückigen Rohrabschnitten hergestellt ist.

Es ist vorgesehen, daß die Ausnehmung von einem am Rohrbogen angeordneten Abdeckblech überdeckt ist. Hierdurch wird ein Eindringen von Schmutz oder ein Einwirken von sonstigen korrosiven Einflüssen, welche die Bälge angreifen könnten, weitgehend verhindert.

Eine sehr einfache und dauerhafte Ausführung zeichnet sich dadurch aus, daß das Abdeckblech als eine das Rohr umfassende Hülse, durch die seitlich der Rohrbogen ragt, ausgebildet ist.

Im folgenden wird die Erfindung anhand der Zeichnung zweier Ausführungsbeispiele näher erläutert. Es zeigen:
- Figur 1: eine erste Ausführungsform mit von außen druckbelasteten Bälgen; und
- Figur 2: eine zweite Ausführungsform mit von innen druckbelasteten Bälgen.

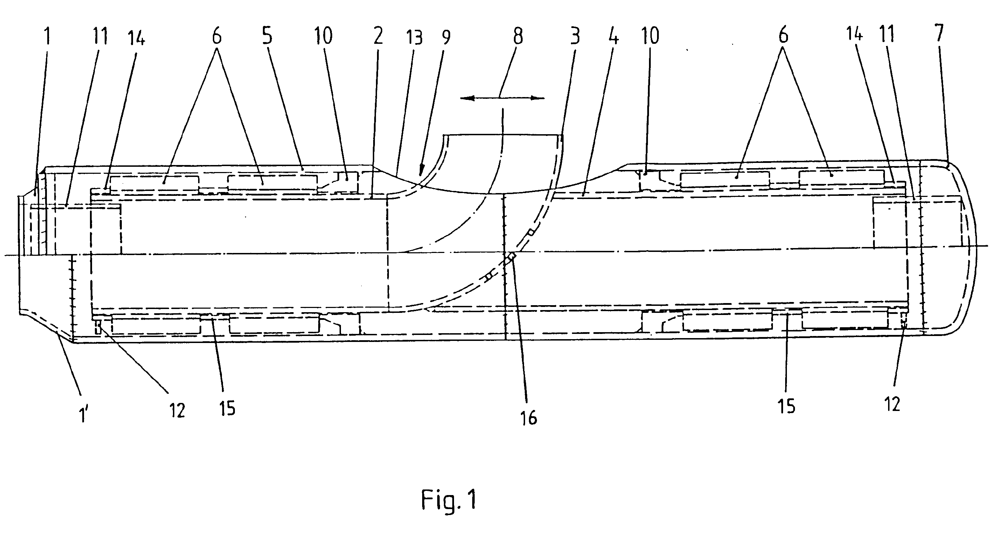

Figur 1 zeigt einen Eckrohrbogenkompensator mit einem Anschlußstutzen 1, einem Leitungsabschnitt 2 und einem sich daran anschließenden Rohrbogen 3. Am Rohrbogen 3 ist axial zum Leitungsabschnitt 2 ein Sattelabschnitt 4 angeordnet. Leitungsabschnitt 2, Rohrbogen 3 und Sattelabschnitt 4 sind von einem Rohr 5 umfaßt und axial verschiebbar gemäß Pfeil 8 geführt. Das freie Ende des Rohrbogens 3 ist durch eine Ausnehmung 9 aus dem Rohr 5 seitlich herausgeführt. Ein Ende des Rohres 5 ist fest mit dem Anschlußstutzen 1 verbunden, das andere Ende wird von einem Endstück 7 druckdicht abgeschlossen.

In einem Ringraum zwischen dem Abschnitt 2 bzw. 4 und dem Rohr 5 sind Bälge 6 angeordnet. Die zu einem Abschnitt 2 bzw. 4 gehörenden Bälge sind an einem Ende über einen Ring 10 mit dem Rohr 5 und am anderen Ende über einen Ring 14 mit dem Abschnitt 2 bzw. 4 druckdicht verbunden. Derart wird zwischen den Abschnitten 2 und 4 und dem Rohr 5 über Bälge 6 eine druckdichte, flexible Verbindung hergestellt. In der Ausführungsform nach Figur 1 umfassen jeweils zwei über einen Zwischenring 15 verbundene Bälge 6 die Abschnitte 2 und 4. Dadurch wird eine besonders große axiale Verschiebbarkeit ermöglicht.

Die Abschnitte 2, 4 und das Rohr 5 sind axial zum Anschlußstutzen 1 angeordnet. Zur Führung der Abschnitte 2, 4 im Rohr 5 sind Führungsrohre 11 oder Führungsringe 12 vorgesehen, welche letztere endseitig außen an den Abschnitten 2, 4 angeordnet werden.

Bei dem in Figur 1 dargestellten Kompensator sind der Anschlußstutzen 1 und das Endstück 7 über das Rohr 5 als Verspannungseinrichtung fest miteinander verbunden. Der Rohrbogen 3 weist Durchbrüche 16 auf, die einen Druckausgleich zwischen dem Leitungsabschnitt 2 und dem Sattelabschnitt 4 ermöglichen. Das freie Ende des Sattelabschnitts 4 ist zum Endstück 7 hin offen, so daß im Bereich des Anschlußstutzens 1 und im Bereich des Endstücks 7 gleiche Druckverhältnisse herrschen. Dies hat zur Folge, daß sich die bei großen Drücken doch erheblichen Kräfte, welche auf den Leitungsabschnitt 2 und den Sattelabschnitt 4 in axialer Richtung wirken, einander entgegengerichtet sind und sich daher gerade aufheben. Dadurch wird eine Druckentlastung erreicht, dies bedeutet, daß eine Verschiebung des Rohrbogens 3 gemäß Pfeil 8 und damit auch eine entsprechende Verschiebung der Abschnitte 2 und 4 unabhängig vom Druck erfolgen kann. Die Gegenkräfte der auf die Abschnitte 2, 4 wirkenden Axialkräfte werden vom Rohr 5 übertragen, was eine dementsprechende Auslegung erforderlich macht.

Der Kompensator führt ein Medium von Anschlußstutzen 1 durch den Leitungsabschnitt 2 und den Rohrbogen 3 zum freien Ende des Rohrbogens 3 oder umgekehrt. Durch die erwähnte druckdichte, flexible Verbindung zwischen den Abschnitten 2, 4 und dem Rohr 5 über die Bälge wird erreicht, daß das Medium nicht durch die Ausnehmung 9 des Rohres 5 nach außen entweichen kann. Diese Ausgestaltung bewirkt vielmehr, daß die Bälge 6 von ihrer Außenseite her druckbelastet sind. Dies ist sehr vorteilhaft, da die außen druckbelasteten Bälge nicht instabil werden. Ein weiterer Vorteil ist darin zu sehen, daß bei dieser Anordnung eine sehr kurze Baulänge des Kompensators ermöglicht wird. Bei einer axialen Verschiebung der Abschnitte 2, 4 gleitet der Zwischenring 15 auf den Abschnitten 2, 4. Die Bälge 6 sind jeweils so angeordnet, daß sie weder Rohr 5 noch den entsprechenden Abschnitt 2 oder 4 berühren, um unnötige Spannungsbelastungen, die bei anliegenden Wellenbergen entstehen würden, im Hinblick auf eine lange Lebensdauer zu vermeiden.

Durch die Führungsrohre 11, welche innen in die Abschnitte 2, 4 eingreifen und am Anschlußstutzen 1 bzw. am Endstück 7 angeordnet sind, ergibt sich gerade im Bereich des Anschlußstutzens 1 eine relativ glatte Innenwand, die dort turbulente Strömungen weitgehend vermeidet. Je nach Auslegung des Spiels der Führungen können die Abschnitte 2, 4 von der Achse des Rohres 5 abweichen und dementspreechend eine gewisse Variation des Winkels vom freien Ende des Rohrbogens 3 zum Anschlußstutzen 1 ermöglichen.

Beim Kompensator nach Figur 1 ist das Rohr 5 teilweise innen druckbelastet. Zudem muß das Rohr 5 axiale Kräfte, wie schon angesprochen, übertragen. Da im Gegensatz zu bisherigen Lösungen die Übertragung der axialen Kräfte im wesentlichen über den gesamten Umfang des Rohres verteilt werden kann, ergibt sich ein minimaler Außendurchmesser des Kompensators. Um eine ausreichende Belastbarkeit des Rohres 5 auch im Bereich der Ausnehmung 9 sicherzustellen, wird die Wanddicke gegebenenfalls insgesamt gleichmäßig erhöht. In einer alternativen Ausführung ist vorgesehen, daß das Rohr 5 zumindest im Bereich der Ausnehmung 9 aus zwei Halbschalen besteht, wobei die Trennebene senkrecht zur dargestellten Schnittebene verläuft, und daß die Halbschale mit der Ausnehmung 9 eine erhöhte Wanddicke aufweist. Der gleiche Effekt kann jedoch auch durch eine Verstärkung des Randes 13 der Ausnehmung 9 erreicht werden.

Im dargestellten Ausführungsbeispiel nach Figur 1 ist das Rohr 5 im Bereich der Ausnehmung 9 zusammengeschweißt und kann alternativ mit einem den Anschlußstutzen 1 bildenden Konus 1′ oder einem Reduzierring zum Übergang auf den Durchmesser des Anschlußstutzens 1 versehen sein.

Ein Verdrehen des Rohrbogens 3 um die Achse der Abschnitte 2, 4 wird durch den Rand 13 der Ausnehmung 9 begrenzt bzw. verhindert. Dies ist zu beachten, da die Bälge 6 torsional nur sehr beschränkt belastbar sind.

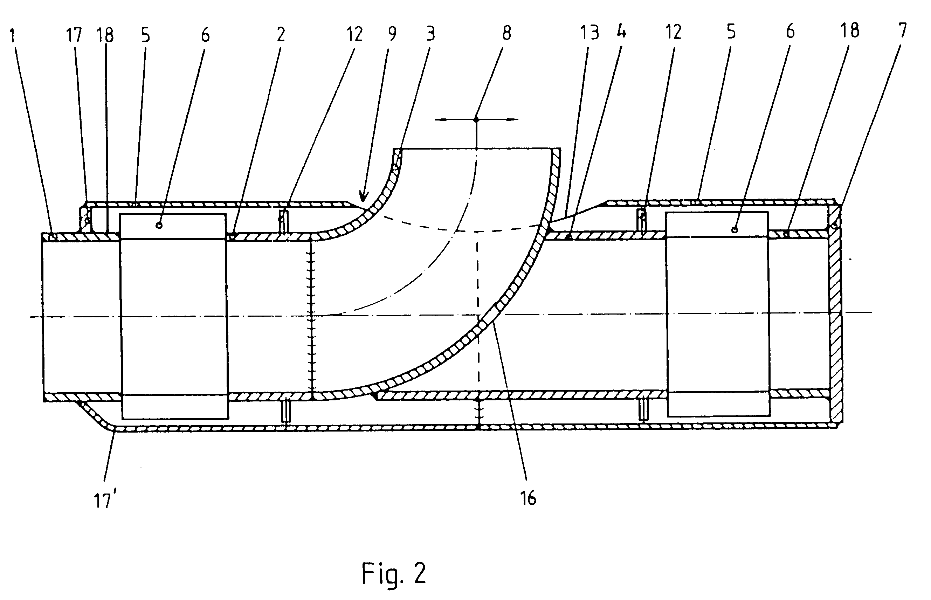

Figur 2 zeigt ein zweites Ausführungsbeispiel eines erfindungsgemäßen Eckrohrbogenkompensators. Gleiche Teile werden mit den gleichen Bezugszeichen wie Figur 1 bezeichnet. Abweichend vom Ausführungsbeispiel nach Figur 1 ist jeweils nur ein Balg 6 am Ende der Abschnitte 2, 4 in deren Verlängerung angeordnet. Die freien Enden der Bälge 6 sind über Rohrabschnitte 18 druckdicht mit dem Anschlußstutzen 1 bzw. dem Endstück 7 verbunden. So wird in dieser Ausführung eine Innendruckbelastung des Rohres 5 vermieden. Im Bereich des Anschlußstutzens 1 ist das Rohr 5 entweder über einen Reduzierring 17 befestigt oder alternativ konisch verjüngt, wie bei 17′ dargestellt.

Bei vorgegebenem Nenndurchmesser des Anschlußstutzens 1 weist der Kompensator nach Figur 2 den geringsten Außendurchmesser auf, da das Rohr 5 nicht innendruckbelastet ist und eine dementsprechend geringere Wanddicke erforderlich ist. Auch entfallen die Wanddicken der Abschnitte 2, 4 und das konstruktionsbedingte Spiel, die mitzuberücksichtigen wären, wenn diese von den Bälgen 6 umfaßt würden.

## Patentansprüche

1. Druckentlasteter Eckrohrbogenkompensator, bestehend aus einem ersten Anschlußstutzen, einem dazu axial angeordneten Leitungsabschnitt, einem sich anschließenden, einen zweiten Anschlußstutzen bildenden Rohrbogen, einem am Rohrbogen axial zum Leitungsabschnitt angeordneten Sattelabschnitt und einer am ersten Stutzen angeordneten, beide Abschnitte über Bälge druckdicht und axial verschiebbar haltenden Verspannungseinrichtung, wobei zur Druckentlastung am Rohrbogen im Bereich des Sattelabschnitts Durchbrüche und am freien Ende der Verspannungseinrichtung ein druckdichtes Endstück vorgesehen sind, **dadurch gekennzeichnet,** daß die Verspannungseinrichtung als ein die Abschnitte (2, 4) umfassendes Rohr (5) mit einer Ausnehmung (9) zur Durchführung des Rohrbogens (3) ausgebildet ist.

2. Kompensator nach Anspruch 1, dadurch gekennzeichnet, daß die Bälge (6) in einem Ringraum zwischen den Abschnitten (2, 4) und dem Rohr (5) angeordnet sind.

3. Kompensator nach Anspruch 1 oder 2, dadurch gekennzeichnet, daß die Bälge (6) von außen druckbelastet sind.

4. Kompensator nach einem der vorangehenden Ansprüche, dadurch gekennzeichnet, daß bei jedem Abschnitt (2, 4) ein Balg (6) druckdicht mit dem Rohr (5) verbunden ist.

5. Kompensator nach einem der vorangehenden Ansprüche, dadurch gekennzeichnet, daß jedem Abschnitt (2, 4) zwei Bälge (6) zugeordnet sind.

6. Kompensator nach Anspruch 5, dadurch gekennzeichnet, daß zwischen den zwei Bälgen (6) eines Abschnitts (2, 4) ein Zwischenring (15) vorgesehen ist.

7. Kompensator nach einem der vorangehenden Ansprüche, dadurch gekennzeichnet, daß die Abschnitte (2, 4) im Rohr (5) axial geführt sind.

8. Kompensator nach Anspruch 7, dadurch gekennzeichnet, daß wenigstens an einem Abschnitt (2, 4) außen ein Führungsring (12) angeordnet ist.

9. Kompensator nach Anspruch 7 oder 8, dadurch gekennzeichnet, daß im Rohr (5) wenigstens ein in einen Abschnitt (2, 4) innen eingreifendes Führungsrohr (11) angeordnet ist.

10. Kompensator nach Anspruch 9, dadurch gekennzeichnet, daß der Anschlußstutzen (1) auch das Führungsrohr (11) des Leitungsabschnitts (2) bildet.

11. Kompensator nach einem der vorangehenden Ansprüche, dadurch gekennzeichnet, daß die Bälge (6) in axialer Verlängerung zu den Abschnitten (2, 4) angeordnet sind.

12. Kompensator nach Anspruch 11, dadurch gekennzeichnet, daß die Bälge (6) die Führungsrohre (11) umfassen.

13. Kompensator nach einem der vorangehenden Ansprüche, dadurch gekennzeichnet, daß das Rohr (5) den Anschlußstutzen (1′) bildet.

14. Kompensator nach einem der vorangehenden Ansprüche, dadurch gekennzeichnet, daß die Ausnehmung (9) so ausgebildet ist, daß ihre Kante (13) ein angulares Verdrehen des Rohrbogens (3) um die Achse der Abschnitte (2, 4) begrenzt oder verhindert.

15. Kompensator nach einem der vorangehenden Ansprüche, dadurch gekennzeichnet, daß das Rohr (5) im Bereich der Kante (13) der Ausnehmung (9) verstärkt ist.

16. Kompensator nach Anspruch 15, dadurch gekennzeichnet, daß die Kante (13) der Ausnehmung (9) einen Kragen aufweist.

17. Kompensator nach einem der vorangehenden Ansprüche, dadurch gekennzeichnet, daß das Rohr (5) aus wenigstens zwei Teilen hergestellt ist.

18. Kompensator nach Anspruch 17, dadurch gekennzeichnet, daß das Rohr (5) aus zwei Halbschalen hergestellt ist.

19. Kompensator nach Anspruch 18, dadurch gekennzeichnet, daß die Ausnehmung (9) in einer höher belastbaren Halbschale ausgebildet ist.

20. Kompensator nach einem der Ansprüche 17 bis 19, dadurch gekennzeichnet, daß das Rohr (5) aus wenigstens zwei Teilen im Bereich der Ausnehmung (9) und sich daran anschließenden, einstückigen Rohrabschnitten hergestellt ist.

21. Kompensator nach einem der vorangehenden Ansprüche, dadurch gekennzeichnet, daß die Ausnehmung (9) von einem am Rohrbogen (3) angeordneten Abdeckblech überdeckt ist.

22. Kompensator nach Anspruch 21, dadurch gekennzeichnet, daß das Abdeckblech als eine das Rohr (2) umfassende Hülse, durch die seitlich der Rohrbogen (3) ragt, ausgebildet ist.

## Claims

1. Pressure neutralizing compensator for a pipe bend, comprising a first pipe union, a line section arranged axially thereto, a connecting pipe bend forming a second pipe union, a saddle section arranged on the pipe bend axially to the line section and a bracing device located on the first union, keeping the two sections pressure-tight by means of bellows and axially displaceable and in which for pressure relief purposes on the pipe bend in the vicinity of the saddle section there are openings and on the free end of the bracing device a pressure-tight end piece, characterized in that the bracing device is constructed as a pipe (5) enveloping the sections (2, 4) and having a recess (9) for the passage of the pipe bend (3).

2. Compensator according to claim 1, characterized in that the bellows (6) are placed in an annular space between the sections (2, 4) and the pipe (5).

3. Compensator according to claim 1 or 2, characterized in that the bellows (6) are subjected to pressure from the outside.

4. Compensator according to any one of the preceding claims, characterized in that in each section (2, 4) a bellows (6) is connected in pressure-tight manner to the pipe (5).

5. Compensator according to any one of the preceding claims, characterized in that two bellows 96) are associated with each section (2, 4).

6. Compensator according to claim 5, characterized in that between the two bellows (6) of a section (2, 4) is provided an intermediate ring (15).

7. Compensator according to any one of the preceding claims, characterized in that the sections (2, 4) are axially guided in the pipe (5).

8. Compensator according to claim 7, characterized in that a guide ring (12) is externally placed on at least one section (2, 4).

9. Compensator according to claim 7 or 8, characterized in that in the pipe (5) is provided at least one guide pipe (11) engaging internally in a section (2, 4).

10. Compensator according to claim 9, characterized in that the pipe union (1) also forms the guide pipe (11) of the line section (2).

11. Compensator according to any one of the preceding claims, characterized in that the bellows (6) are arranged in axial extension to the sections (2, 4).

12. Compensator according to claim 11, characterized in that the bellows (6) envelop the guide pipes (11).

13. Compensator according to any one of the preceding claims, characterized in that the pipe (5) forms the pipe union (1′).

14. Compensator according to any one of the preceding claims, characterized in that the recess (9) is constructed in such a way that its edge (13) prevents or limits an angular twisting of the pipe bend (3) about the axis of the sections (2, 4).

15. Compensator according to any one of the preceding claims, characterized in that the pipe (5) is reinforced in the vicinity of the edge (13) of the recess (9).

16. Compensator according to claim 15, characterized in that the edge (13) of the recess (9) has a collar.

17. Compensator according to any one of the preceding claims, characterized in that the pipe (5) is made from at least two parts.

18. Compensator according to claim 17, characterized in that the pipe (5) is made from two half-shells.

19. Compensator according to claim 18, characterized in that the recess (9) is constructed in a more highly loadable half-shell.

20. Compensator according to any one of the claims 17 to 19, characterized in that the pipe (5) is made from at least two parts in the vicinity of the recess (9) and one-piece pipe sections connecting on to the same.

21. Compensator according to any one of the preceding claims, characterized in that the recess (9) is covered by a cover plate located on the pipe bend (3).

22. Compensator according to claim 21, characterized in that the cover plate is constructed as sleeve surrounding the pipe (2) and through which the pipe bend (3) laterally projects.

## Revendications

1. Compensateur à pression neutralisée pour coude de tuyau comportant un premier manchon de raccordement auquel est raccordé axialement un segment de conduite, un coude de tuyau formant un second manchon de raccordement et se montant à leur suite, un segment de conduite en forme de selle étant raccordé au coude axialement par rapport audit segment de conduite ainsi qu'un dispositif de rigidification disposé sur le premier manchon et maintenant les deux segments de manière étanche à la pression et mobile en coulissement axial au moyen de soufflets, des ouvertures ainsi qu'un élément terminal étanche à la pression étant prévus pour neutraliser ladite pression, lesdites ouvertures étant situées sur le coude au niveau du segment de conduite en forme de selle et ledit élément terminal étanche à la pression étant monté à l'extrémité libre du dispositif de rigidification, caractérisé en ce que le dispositif de rigidification est conformé selon un tuyau (5) entourant les segments (2,4) et présente un évidement (9) pour le passage du coude (3).

2. Compensateur selon la revendication 1, caractérisé en ce que les soufflets (6) sont disposés dans un espace annulaire entre les segments (2,4) et le tuyau (5).

3. Compensateur selon les revendications 1 ou 2 caractérisé en ce que les soufflets (6) sont mis sous pression depuis l'extérieur.

4. Compensateur selon l'une quelconque des revendications précédentes, caractérisé en ce qu'un soufflet (6) est relié de manière étanche au tuyau (5) au niveau de chaque segment (2,4).

5. Compensateur selon l'une quelconque des revendications précédentes, caractérisé en ce que deux soufflets (6) sont disposés sur chaque segment (2,4).

6. Compensateur selon la revendication 5, caractérisé en ce qu'un anneau intermédiaire (15) est prévu entre les deux soufflets (6) d'un segment (2,4).

7. Compensateur selon l'une quelconque des revendications précédentes, caractérisé en ce que les segments (2,4) sont guidés axialement dans le tuyau (5).

8. Compensateur selon la revendication 7, caractérisé en ce qu'un anneau de guidage (12) est disposé à l'extérieur sur au moins un segment (2,4).

9. Compensateur selon les revendications 7 ou 8, caractérisé en ce qu'au moins un tube de guidage (11) pénétrant à l'intérieur d'un segment (2,4) est disposé dans le tuyau (5).

10. Compensateur selon la revendication 9, caractérisé en ce que le manchon de raccordement (1) forme également le tube de guidage (11) du segment de conduite (2).

11. Compensateur selon l'une quelconque des revendications précédentes, caractérisé en ce que les soufflets (6) sont disposés dans le prolongement axial des segments (2,4).

12. Compensateur selon la revendication 11, caractérisé en ce que les soufflets (6) entourent les tubes de guidage (11).

13. Compensateur selon l'une quelconque des revendications précédentes, caractérisé en ce que le tuyau (5) forme le manchon de raccordement (1′).

14. Compensateur selon l'une quelconque des revendications précédentes, caractérisé en ce que l'évidement (9) est conformé de telle sorte que son arête (13) limite ou empêche un pivotement angulaire du coude de tuyau (3) autour de l'axe des segments (2,4).

15. Compensateur selon l'une quelconque des revendications précédentes, caractérisé en ce que le tuyau (5) est renforcé au niveau de l'arête (13) de l'évidement (9).

16. Compensateur selon la revendication 15, caractérisé en ce que l'arête (13) de l'évidement (9) présente une collerette.

17. Compensateur selon l'une quelconque des revendications précédentes, caractérisé en ce que le tuyau (5) est constitué d'au moins deux parties.

18. Compensateur selon la revendication 17, caractérisé en ce que le tuyau (5) est formé de deux demi-coques.

19. Compensateur selon la revendication 18, caractérisé en ce que l'évidement (9) est conformé dans une demi-coque de grande résistance.

20. Compensateur selon l'une des revendications 17 à 19, caractérisé en ce que le tuyau (5) est formé d'au moins deux parties au niveau de l'évidement (9) et des segments de conduite d'une seule pièce qui y sont connectés.

21. Compensateur selon l'une quelconque des revendications précédentes, caractérisé en ce que l'évidement (9) est recouvert par une tôle de recouvrement disposée au niveau du coude de tuyau (3).

22. Compensateur selon la revendication 21, caractérisé en ce que la tôle de recouvrement est conformée selon un manchon entourant le tuyau (5), que le coude (3) traverse latéralement.
